# EUROPEAN PATENT SPECIFICATION

(11) **EP 1 308 097 B1**
(45) Date of publication and mention of the grant of the patent: **08.03.2006**
(21) Application number: 01954452.7
(22) Date of filing: 06.08.2001
(51) Int. Cl.: A23L 1/23, A23L 1/231, A23L 1/238

(54) **METHOD OF SEASONING FOOD MATERIALS**
METHODE ZUM WÜRZEN VON LEBENSMITTELN
METHODE D'ASSAISONNEMENT D'ALIMENTS

(30) Priority: 09.08.2000 JP 2000241941
(43) Date of publication of application: 07.05.2003
(73) Proprietor: NIPPON SUISAN KAISHA, LTD., Tokyo 100-0004 (JP)
(72) Inventor: DOUMOTO, Nobuhiko, Nippon Suisan Kaisha, Ltd., Hachioji-Shi, Tokyo 192-0906 (JP); KOSAKA, Masahito, Nippon Suisan Kaisha, Ltd., Hachioji-Shi, Tokyo 192-0906 (JP); KORIYAMA, Tsuyoshi, Nippon Suisan Kaisha, Ltd., Hachioji-Shi, Tokyo 192-0906 (JP)
(74) Representative: TBK-Patent
(86) International application number: PCT/JP2001/006727
(87) International publication number: WO 2002/011561

(56) References cited:
- JP-A- 2 312 557
- JP-A- 8 256 727
- JP-A- 9 191 850
- JP-A- 50 145 597
- JP-A- 2000 295 971
- DATABASE BIOSIS BIOSCIENCES INFORMATION SERVICE, PHILADELPHIA, PA, US; Journal of Agricultural Science 1989; 34:10-15 1990, TACHI H, ITO H, KIKUCHI S: "Applications of Antartic krills to making of fermented seasonings" XP002293667 Database accession no. 199089036886
- PATENT ABSTRACTS OF JAPAN vol. 0041, no. 51 (C-028), 23 October 1980 (1980-10-23) & JP 55 096073 A (NAGANO CHUO ICHIBA:KK), 21 July 1980 (1980-07-21)
- PATENT ABSTRACTS OF JAPAN vol. 0081, no. 30 (C-229), 16 June 1984 (1984-06-16) & JP 59 042863 A (SUNAO TOMINAGA), 9 March 1984 (1984-03-09)
- PATENT ABSTRACTS OF JAPAN vol. 0111, no. 92 (C-429), 19 June 1987 (1987-06-19) & JP 62 014764 A (KIKKOMAN CORP), 23 January 1987 (1987-01-23)
- PATENT ABSTRACTS OF JAPAN vol. 0060, no. 44 (C-095), 19 March 1982 (1982-03-19) & JP 56 160963 A (TOMINAGA SUNAO), 11 December 1981 (1981-12-11)

## Description

The present invention relates to a method of seasoning food materials by employing functional seasonings, which employ, as a starting material, krill, particularly dried krill particles containing all the components of krill, and have a function of promoting the penetration of seasonings and/or a function of softening food materials.

### Background Art

Seasonings used for spicing food materials are requested to have various functions depending on types of cooking and materials. It has been tried to promote the penetration of seasonings into food materials by improving, e.g., the heating method rather than the seasonings themselves. However, the operation to realize an improvement with the heating method is complicated and difficult for domestic use. For softening food materials, there are a variety of softeners such as phosphates, alkaline agents, emulsifiers and enzymes. However, those softeners other than enzymes are chemical compounds, and softeners derived from natural materials are required. Also, enzymes are difficult to control, and the softness of enzyme treated foods is not satisfactorily preferable as a texture of foods.

Recently, various natural seasonings have been popularized and include, as a typical example, fish sauces represented by nuoc nam and nampla. Those fish sauces are produced as follows. Fishes and shellfishes as starting materials are preserved in a cask with addition of about 20 - 30 % of salt, and then just left to stand for one to two years. During the preservation, protein is decomposed and an extract is obtained through the action of a self-digesting enzyme specific to fishes and shellfishes. After filtering the extract and removing the residue, a resulting product is heated, following which sediments and suspended matters are removed.

While the fish sauce produced through such a process has a specific good taste, it also has a putrid smell due to a fishy smell and an oil-like smell peculiar to fishes and shellfishes, as well as to the action of putrefactive bacteria. In view of such a drawback, various endeavors have been made with intent to provide liquid seasonings, which have a good flavor specific to fishes and shellfishes and are free from the fishy smell, etc. peculiar to fishes and shellfishes, by using fishes and shellfishes as starting materials and utilizing useful microorganisms and enzymes.

In the case of foods cooked for a long time like Japanese hotchpotch (oden), it is a new problem that is generation of an unpleasant oden smell (mixture of a baked soy sauce, a baked oil smell and smells of various materials) during the cooking. Therefore, an extract or fish sauce free from a fishy smell, which causes the unpleasant oden smell, is required for preparing an oden soup. The inventors have found the fact that soy sauce using krill as starting materials has the action of masking such an unpleasant oden smell, and have separately filed an application for a patent (Japanese Patent Application No. 12-34105).

Tachi H et al, Journal of Agricultural Science; 34: 10-15, 1990, is directed to a fermented seasoning made from krill, which is produced by fermenting krill with Aspergillus tamarii, Pediococcus halophilus and Zygosaccharomyces rouxii.

JP-A-8 256 727 discloses a method for producing a fish soy from fish or shellfish, which comprises the addition of melted rice, a lactobacillus and a yeast to the fish or shellfish, followed by fermentation and aging.

JP-A-9 191 850 describes the production of concentrated soy sauce from fish and shellfish, while the method for producing this soy sauce comprises the addition of salt, koji, a lactic acid bacterium and a yeast followed by fermentation and aging.

### Disclosure of the Invention

The present invention resides in a method of seasoning food materials characterized in employing a seasoning comprising as a starting material and utilizing a function of the seasoning for promoting the penetration of seasonings into food materials and/or a function of the seasoning for softening food materials.

The krill used as a starting material is in the form of dried krill, preferably dried krill particles containing all the components of krill. Thus, the present invention resides in a method of seasoning food materials characterized in employing a seasoning with dried krill, preferably dried krill particles containing all the components of krill, used as a starting material, and utilizing a function of the seasoning for promoting the penetration of seasonings into food materials and/or a function of the seasoning for softening food materials.

The seasoning comprising krill as a starting material may be produced by a process of adding water, salt and *koji* to krill employed as starting materials in the step of producing *moromi* (soy sauce mash), further adding lactic acid bacteria and yeast, preferably halotolerant lactic acid bacteria and halotolerant yeast, and then fermenting and aging the *moromi.* Thus, the present invention resides in a method of seasoning food materials characterized in employing a seasoning comprising krill as a starting material, which may be produced by a process of adding water, salt and *koji* to krill employed as starting materials in the step of producing *moromi* (soy sauce mash), further adding lactic acid bacteria and yeast, preferably halotolerant lactic acid bacteria and halotolerant yeast, and then fermenting and aging the *moromi,* as well as characterized in utilizing a function of the seasoning for promoting the penetration of seasonings into food materials and/or a function of the seasoning for softening food materials.

The seasoning with krill used as a starting material may be produced by a process of adding water, salt and *koji* to krill employed as starting materials in the step of producing *moromi* (soy sauce mash), further adding lactic acid bacteria and yeast at such a ratio that the amount of the lactic acid bacteria is 10 times or more the amount of the yeast, and then fermenting and aging the *moromi.* Thus, the present invention resides in a method of seasoning food materials characterized in employing a seasoning comprising krill as a starting material, which may be produced by a process of adding water, salt and *koji* to krill employed as starting materials in the step of producing *moromi* (soy sauce mash), further adding lactic acid bacteria and yeast, preferably halotolerant lactic acid bacteria and halotolerant yeast, at such a ratio that the amount of the lactic acid bacteria is 10 times or more as the H amount of the yeast, and then fermenting and aging the *moromi,* as well as characterized in utilizing a function of the seasoning for promoting the penetration of seasonings into food materials and/or a function of the seasoning for softening food materials.

In the method of seasoning food materials, the food materials may be vegetables and/or meats into which the seasoning is penetrated. Thus, the present invention preferably resides in a method of seasoning vegetables and/or meats characterized in employing a seasoning comprising krill as starting material, and utilizing a function of the seasoning for promoting the penetration of seasonings into food materials and/or a function of the seasoning for softening food materials, whereby the seasoning penetrates into vegetables and/or meats.

In the method of seasoning food materials, the food materials may be meats and the meats are softened with the penetration of the seasoning. Thus, the present invention resides in a method of seasoning meats characterized in employing a seasoning comprising krill as a starting material, and utilizing a function of the seasoning for promoting the penetration of seasonings into food materials and/or a function of the seasoning for softening food materials, whereby the meats are softened.

### Brief Description of the Drawings

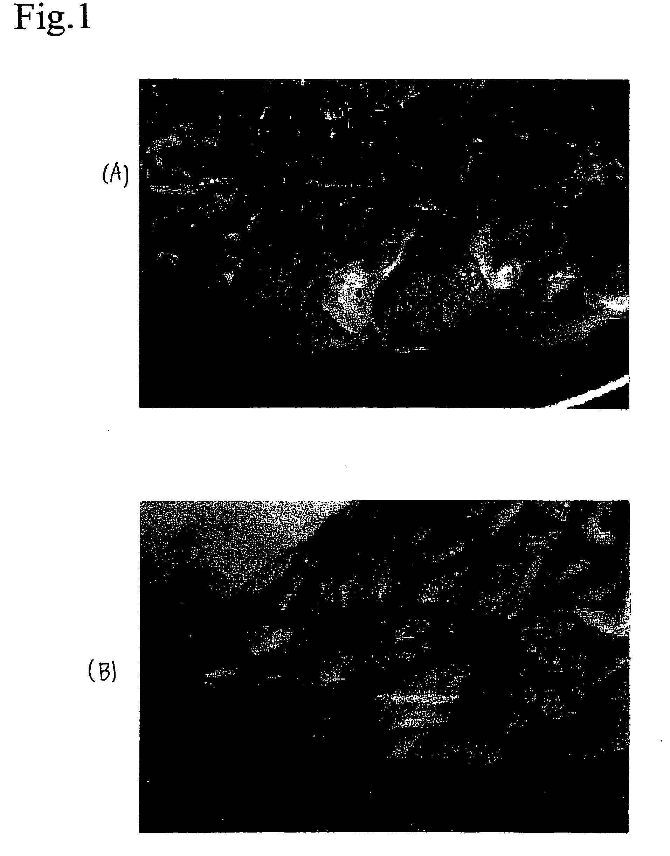

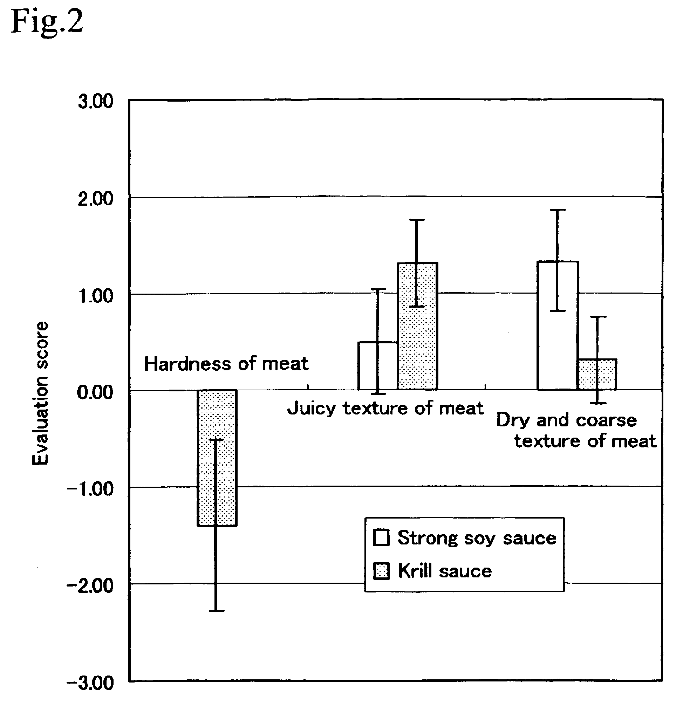

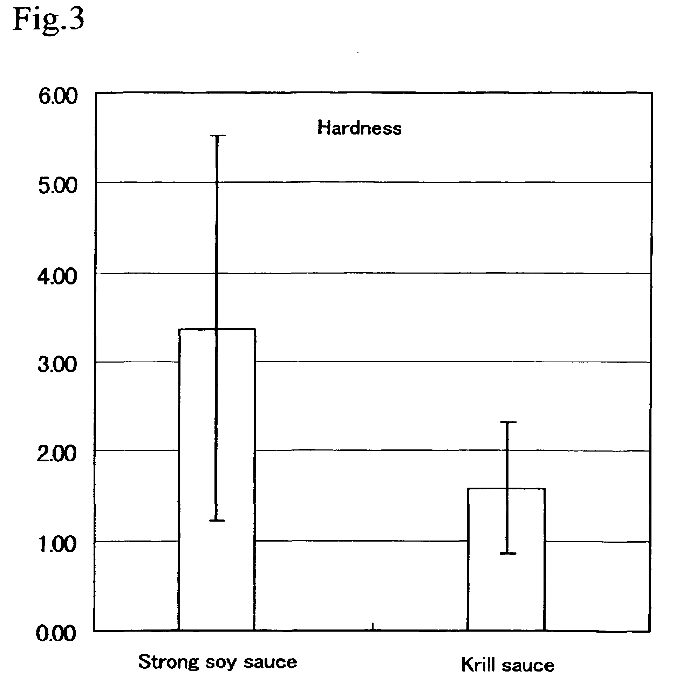

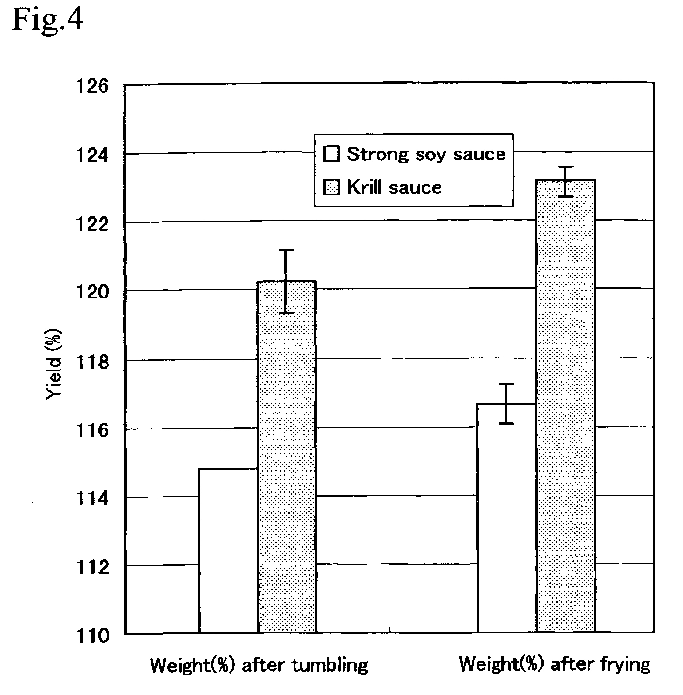

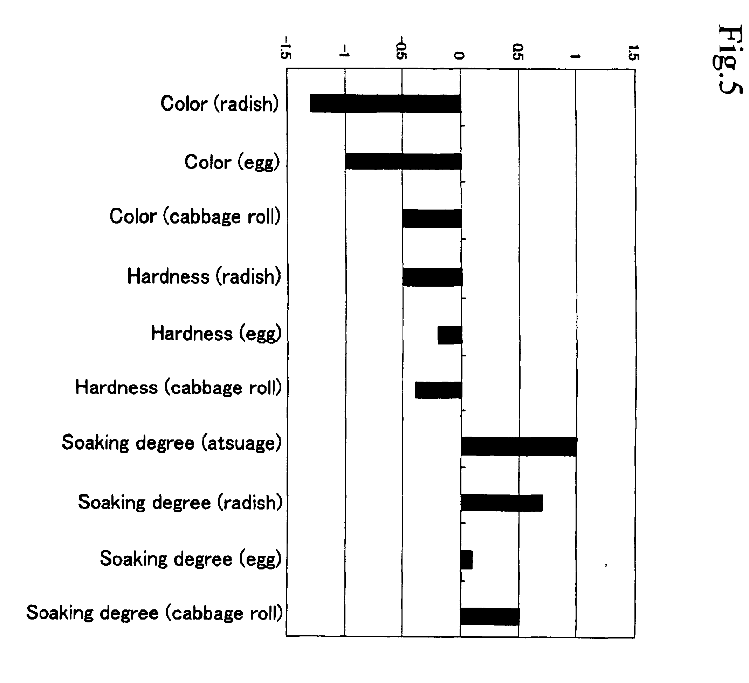

Fig. 1 is a photograph, substituted for a drawing, for explaining a function of krill sauce to promote the penetration of a seasoning liquid krill sauce into white meat of chicken, in which Fig. 1(A) represents the case of adding the krill sauce and Fig. 1(B) represents the case of not adding the krill sauce. Fig. 2 is a graph for explaining results of sensory evaluation in application tests using dark meat of chicken. Fig. 3 is a graph for explaining results of function analysis in application tests using dark meat of chicken. Fig. 4 is a graph for explaining results (penetration) of application tests using dark meat of chicken. Fig. 5 is a graph for explaining effects of the krill sauce upon various materials of Japanese hotchpotch *(oden).*

### Best Mode for Carrying out the Invention

Krill or mysids in the near sea, which is expected to be useful as resources not yet utilized, can be employed as starting materials for producing the functional seasonings of the present invention, in particular, krill sauce. As the krill (Phylum; *Arthropoda,* Class; *Crustacea,* Subclass; *Malacostraca,* Superorder; *Eucarida,* Order; *Euphausiacea),* Antarctic krill is preferable, but the present invention is not limited to that type of krill. Mysids (Phylum; *Arthropoda*, Class; *Crustacea*, Subclass; *Malacostraca*, Superorder; *Peracarida*, Order; *Mysina*) caught in Japanese near water, etc. are also usable. Dried krill may be any kind of krill so long as the krill is dried. However, the dried krill is preferably in the form of dried krill particles, which are dried by a method capable of maintaining all the components of krill as far as possible. The dried krill is featured in having a high protein content.

The dried krill for use in the present invention is produced, by way of example, through the following process.

Caught krill is subjected to a dehydrator for removing seawater, etc. adhering to the krill surface. The dehydrated krill is pulverized to increase the thermal efficiency for drying under heating. Then, the pulverized krill is subjected to the drying under heating. A well-known heating and drying machine, e.g., a vapor-type disk dryer, is employed. The dried krill can be easily pulverized into any desired particle size by a pulverizer.

A process for producing the functional seasoning, particularly the krill sauce, according to the present invention will be described in connection with an embodiment using the dried krill particles as the starting material krill.

The krill sauce is produced by mixing the dried krill particles, *koji*, and a solution of salt with each other, followed by fermentation and aging of the mixture. More specifically, the dried krill particles, *koji,* and a solution of salt are mixed to produce *moromi* (soy sauce mash) with addition of lactic acid bacteria and yeast. After sufficient agitation, the *moromi* is fermented and aged while controlling the temperature of the *moromi.* Thereafter, the krill sauce is obtained through the steps of pressing the juice from the *moromi,* heating, filtering, and so on.

Stated otherwise, strong krill sauce having an improved flavor is produced by mixing the dried krill particles for use in producing the krill sauce, *koji*, and a solution of salt in the step of producing *moromi,* further adding lactic acid bacteria and yeast, and then fermenting and aging the *moromi.*

*Koji* used in the present invention is not limited to a particular one. Since *koji* serves to replenish enzymes, such as proteolytic enzymes, and carbohydrates, *Aspergillus sojae, Aspergillus oryzae* or the like is usable as seed *koji*. Also, from the viewpoint of replenishing carbohydrates, wheat, rice, corn, etc., containing abundant starch, are preferably added as materials of *koji.*

Salt is added to prevent rotting during decomposition by enzymes and to promote selective proliferation of halotolerant microorganisms. The amount of salt is desirably adjusted such that it is in the range of 20 to 30 weight% with respect to the total of the basic materials, and that the salt concentration is kept in the range of about 12 % to 25 % (WN).

Halotolerant microorganisms used in the present invention for decomposition by enzymes and aging are not limited to particular ones. For example, halotolerant yeasts (*Zygosaccharomyces rouxxii*, *Torulopsis maganoliae*, *Torulopsis nodaensis, Torulopsis etchellsii, Torulopsis halonitratoahila. Torulopsis halophila,* and *Torulopsis mannitofaciens*) are usable.

Thus, the dried krill particles, *koji,* a solution of salt, lactic acid bacteria and yeast are mixed to produce *moromi,* and after sufficient agitation, the *moromi* is fermented and aged in a fermenting tank. The amount of lactic acid bacteria is preferably ten or more times as much as the amount of yeast. In the fermenting tank, there proceed decomposition of protein and carbohydrates, as starting materials, with enzymes and the fermenting and aging actions with halotolerant microorganisms. During that period, fermenting conditions may be set to those used in conventional fermentation. In particular, however, the temperature is preferably held in a zone, i.e., not higher than 40 °C, in which lactic fermentation takes place.

After the end of the fermenting and aging step, a liquid portion of the *moromi* is extracted by pressing juice from the *moromi.* A resulting filtrate is left to stand so that insoluble protein, etc. are separated out into a precipitate. Raw krill sauce may be obtained by taking a supernatant liquid of the filtrate. Further, the raw krill sauce is pasteurized under heating. By removing a resulting insoluble and separating a liquid through filtering, clean krill sauce is obtained.

With the production process described above, krill sauce having a strong taste and having a function of promoting the penetration of seasonings and a function of softening food materials can be produced which is improved in flavor, aroma and properties and is, in particular, free from unpleasant smells specific to conventional fish sauces.

The term "strong taste" used herein basically means that the total amount of nitrogen as an objective index is relatively high. However, the strong taste depends upon not only the amount of nitrogen, but also a balance among components of the krill sauce, which is another important evaluation criteria.

Regarding functions of the krill sauce, it was confirmed by sensory tests that it has the masking effect (as disclosed in Japanese Patent Application No. 12-34105 separately filed by the applicant), the softening effect, high penetration, and the taste adjusting effect.

The masking function relies on such a mechanism that neutralization of alkaline substances due to lactic acid is accelerated by the presence of amino acids, peptide, etc. In other words, the masking function is developed based on combination of lactic acid and decomposed substances generated with fermentation of protein uniquely contained in the starting materials. Sauce using krill as starting materials produces a large amount of amino acids and peptide, which are decomposed substances generated with fermentation of protein uniquely contained in the starting materials, and therefore presents a high masking effect.

Furthermore, the strong and rich krill sauce according to the present invention has not only the function of masking a fishy smell, but also a function of promoting the penetration of seasonings into foods used the krill sauce and a function of softening food materials.

Those effects are obtained regardless of the kind of food materials, including meats and vegetables, and are not restricted depending upon cooking methods. For greenstuffs and other vegetable materials, when the krill sauce is added to pickles or the likes that are not subjected to heating, it promotes the penetration of other seasonings into the pickles and expedites dehydration from the pickled vegetables. Therefore, the pickling time can be cut down. Also, when the krill sauce is added in the step of cooking vegetables, it not only promotes the penetration of other seasonings into the interior of the vegetables to which they cannot otherwise reach, but also softens the textures of the vegetables. For animal food materials including cattle meats, such as beef, pork and mutton, chickens, fishes, eggs, etc., it has been confirmed that the krill sauce develops the function of promoting the penetration of seasonings and the function of softening those food materials when it is added to them in a raw state, during and after heating, and even in a frozen state.

The concentration of the krill sauce is adjusted, as required, depending upon the degree of penetration and/or softening desired, food materials to which the krill sauce is added, and the purpose.

The present invention will be described below in more detail in connection with Examples. It is to be noted that the present invention is in no way limited by the following Examples.

### Example 1

### <<Production of Functional Seasoning (Krill sauce)>>

After mixing 3 kg of the dried krill particles, 3 kg of *koji,* and 7 kg of a 15 %-solution of salt with each other, halotelerant lactic acid bacteria and yeast were added at a ratio of 20 : 1, and the mixture was left to stand at temperature lower than 15°C for one month or more. Then, after fermenting and aging it at a temperature lower than 20 °C for about four months, a resulting *moromi* was subjected to the steps of pressing juice from the *moromi,* heating and filtering. As a result, 9.0 kg of krill sauce having a rich aroma and a strong nice taste was obtained. The krill sauce was completely free from unpleasant smells specific to conventional fish sauces.

Physiochemical analysis was carried out on the functional seasoning (krill sauce) thus obtained. Results of the physio- chemical analysis are listed in Table 1 given below.

**Table 1**

| | Krill sauce |
|---|---|
| Brix | 34.2 |
| Salt (%) | 14.5 |
| TN (%) | 1.72 |
| FN (%) | 0.8 |
| Saccharides (%) | 1.41 |
| Alcohol (%) | 1.01 |
| pH | 5.1 |
| Lactic acid (mg/100 ml) | 4320 |

### <<Application Tests Using Taros>>

Taros were boiled (for boiling time of 20 minutes) by adjusting the salt concentration of each of the functional seasoning (krill sauce) obtained as described above and strong soy sauce as a control to be equal to 1 %. For confirming an improvement of the penetration due to the krill sauce, inorganic components of the boiled taros in the frozen and boiled state were analyzed using an EDX (Energy Distributed X-ray Analyzer). The analysis was carried out separately for surface portions and central portions of the taros. Analysis results are shown in Table 2 given below.

**Table 2**

| | Cl | K | Cl/K |
|---|---|---|---|
| Krill sauce (inner) | 18.51 | 69.31 | 0.267 |
| Krill sauce (outer) | 41.25 | 55.97 | 0.737 |
| Strong soy sauce (inner) | 2.46 | 97.89 | 0.025 |
| Strong soy sauce (outer) | 26.07 | 73.93 | 0.353 |

| | | | |
|---|---|---|---|
| Cl: originated from krill sauce and from soy sauce | | | |
| K: substantially originated from taros | | | |

As seen from Table 2, the use of the krill sauce increased the ratio of Cl to K 2.1 times in the surface portions of the taros and 10 times in the inner portions of the taros. In other words, the above results show an improvement of the penetration resulting from using the krill sauce. Additionally, the taros boiled using the krill sauce were more fluffy and soft than those boiled using the strong soy sauce.

### «Application Tests Using White Meat of Chicken»

Penetration tests were carried out on commercially available white meat of chicken by adjusting the salt concentration of each of the functional seasoning (krill sauce) obtained as described above and strong soy sauce as a control to be equal to 1 %. Soaking of the soy sauce into the white meat of chicken was conducted through tumbling using 2 weight % of the krill sauce or strong soy sauce. The white meat of chicken was steamed at 99 °C for 5 minutes.

The degree of softening was evaluated based on the feel in eating a central portion of the steamed meat.

The feel in eating was represented using numerical values 0 to 5 (0: hard ← 3: rather hard → 5: soft).

The degree of penetration of the seasoning liquid was represented using numerical values 10 to 0 (10: complete penetration ← 5: about half penetration → 5: no penetration).

Test results are shown in Table 3 given below.

**Table 3**

| Presence/absence of krill sauce | Degree of TB penetration | | Softness of central portion |
|---|---|---|---|
| | 15 min | 30 min | |
| presence | 8 | 9 | 4 |
| absence | 5 | 7 | 2 |

### <<Results>>

### 1) Penetration

Comparing the penetration of the krill sauce and that of the strong soy sauce, the krill sauce was absorbed in the white meat of chicken in a shorter time. Hence, it proved that the krill sauce had a function of accelerating the penetration speed of the seasoning liquid. A photograph representing the degree of penetration is shown in Fig. 1.

### 2) Softening of Meat

Comparing the softness of the meat central portion between the presence and the absence of the krill sauce, it proved that softening of the meat was increased with the presence of the krill sauce.

### «Application Tests Using Dark Meat of Chicken»

Penetration tests were carried out on commercially available dark meat of chicken by using the functional seasoning (krill sauce) obtained as described above and strong soy sauce as a control.

The dark meat of chicken (23 ± 3 g) was soaked in a tumbling solution and subjected to tumbling for 30 minutes. After sprinkling flour powder and coating batter, the dark meat of chicken was fried (175 °C: 40 sec, 180 °C: 2 min 50 sec). The fried meat was frozen at - 30°C using an air blaster, and after preserving for 1 to 2 days, it was thawed using a microwave oven (40 sec/piece).

Evaluation was performed on the following items.
· For hardness, juicy texture of the meat, and dry and coarse texture of the meat, sensory evaluation was carried out with 6-stage scores by selecting 10 panel members. (after thawing by a microwave oven)
· Further, hardness was measured with functional analysis [using Tensi-presser, My Boy System made by Takemoto Electric Mfg. Ltd.].
· The soaking degree was measured by comparing the weight after tumbling and the weight after frying.

Table 4 given below shows the composition of the seasoning liquid. In Table 4, the weight of each of mixed components is represented in units of g with respect to 100 g of the meat. Measured results are shown in Figs. 2 to 4.

**Table 4**

| | Strong soy sauce | Krill sauce |
|---|---|---|
| Sorbitol | 0.8 | 0.8 |
| Krill sauce | 0 | 1 |
| Soaking agent | 1.2 | 1.2 |
| Strong soy sauce | 4 | 3 |
| Pepper | 0.1 | 0.1 |
| Na glutamate | 0.4 | 0.4 |
| Water | 18 | 18 |

### Example 2

The effect of the krill sauce upon softening of food materials and penetration of the seasoning liquid was examined by replacing a part of Japanese hotchpotch *(oden)* soup with the krill sauce.

### Sample

· *Oden* soup: commercially available *Oden* soup and the *Oden* soup added with the krill sauce (0.2 %) (salt concentration was adjusted to be the same)
· Food materials: Japanese radish (*daikon*)*,* eggs, *chikuwa* (a kind of fish paste), *atsuage* (fried *tofu),* and cabbage rolls.
· Conditions: heating at 80 °C ± 5 °C for 6 hours by an electromagnetic cooker
· Evaluation

Sensory evaluation was conducted for colors and hardness of the food materials, and the soaking degree of the seasoning liquid into the food materials by selecting five professional panel members. Evaluation result was scored in ± 3 stages on an assumption that the food materials seasoned with the commercially available *Oden* soup were scored as 0.

Fig. 5 shows the evaluation results. As seen from those results, the food materials seasoned with the krill sauce had lighter colors, a higher softness (lower hardness), and flavors soaked into the deeper interiors. Hence, it was confirmed that the krill sauce had the effects of accelerating the penetration speed of the seasoning liquid and softening food materials, and that adding the krill sauce to *Oden* soup was advantageously effective in improving the flavor and the feel in eating the food materials.

### Industrial Applicability

According to the present invention, a method of seasoning food materials by employing seasonings is provided, in which seasonings are a strong and rich fish sauce being completely free from unpleasant smells peculiar to conventional fish sauces, which have the action of masking such unpleasant smells, and which do not only promote the penetration of seasonings into food materials, but also soften the food materials.

## Claims

1. A method of seasoning food materials wherein a seasoning comprising krill as a starting material is employed, and **characterized in that** the penetration of seasonings into food materials is promoted and/or the food materials are softened.

2. A method of seasoning food materials according to claim 1, wherein the krill used as a starting material is in the form of dried krill.

3. A method of seasoning food materials according to claim 1 or 2, wherein the krill used as a starting material is in the form of dried krill particles containing all components of krill.

4. A method of seasoning food materials according to any one of the preceding claims, wherein the seasoning comprising krill as a starting material is produced by adding water, salt and *koji* to the krill employed as starting material in the step of producing *moromi,* a soy source mash*,* further adding lactic acid bacteria and yeast, and then fermenting and aging the *moromi*.

5. A method of seasoning food materials according to claim 4, wherein the lactic acid bacteria and the yeast are halotolerant.

6. A method of seasoning food materials according to claim 4, wherein the lactic acid bacteria and yeast are added at such a ratio that the amount of the lactic acid bacteria is 10 times or more the amount of the yeast.

7. A method of seasoning food materials according to any one of the preceding claims, wherein the food materials are vegetables and/or meat into which the seasoning is penetrated.

8. A method of seasoning food materials according to any one of the preceding claims, wherein the food materials is meat and the meat is softened with the penetration of the seasoning.

## Patentansprüche

1. Verfahren zum Würzen von Lebensmittelmaterialien, wobei ein Gewürz eingesetzt wird, das Krill als ein Ausgangsmaterial umfasst, **dadurch gekennzeichnet, dass** das Eindringen der Gewürze in die Lebensmittelmaterialien gefördert und/oder die Lebensmittelmaterialien erweicht werden.

2. Verfahren zum Würzen von Lebensmittelmaterialien nach Anspruch 1, wobei der als ein Ausgangsmaterial verwendete Krill in der Form von getrocknetem Krill ist.

3. Verfahren zum Würzen von Lebensmittelmaterialien nach Anspruch 1 oder 2, wobei der als ein Ausgangsmaterial verwendete Krill in der Form von getrockneten Krillteilchen ist, die alle Krillbestandteile enthalten.

4. Verfahren zum Würzen von Lebensmittelmaterialien nach einem der vorhergehenden Ansprüche, wobei das Gewürz mit Krill als ein Ausgangsmaterial durch Zugabe von Wasser, Salz und *Koji* zu dem als ein Ausgangsmaterial verwendeten Krill im Schritt der Herstellung von *Moromi* (ein Sojasoßenbrei) und ferner durch Zugabe von Milchsäurebakterien und Hefe und dann Fermentieren und Altern des *Moromi* hergestellt wird.

5. Verfahren zum Würzen von Lebensmittelmaterialien nach Anspruch 4, wobei die Milchsäurebakterien und die Hefe halotolerant sind.

6. Verfahren zum Würzen von Lebensmittelmaterialien nach Anspruch 4, wobei die Milchsäurebakterien und die Hefe in einem derartigen Verhältnis zugegeben werden, dass die Milchsäurebakterien in einer 10 fachen Menge oder mehr der Menge der Hefen sind.

7. Verfahren zum Würzen von Lebensmittelmaterialien nach einem der vorhergehenden Ansprüche, wobei die Lebensmittelmaterialien Gemüse und/oder Fleisch sind, in welche das Gewürz eingedrungen ist.

8. Verfahren zum Würzen von Lebensmittelmaterialien nach einem der vorhergehenden Ansprüche, wobei das Lebensmittelmaterial Fleisch ist, und das Fleisch mit dem Eindringen des Gewürzes erweicht wird.

## Revendications

1. Procédé d'assaisonnement de matières alimentaires, dans lequel un assaisonnement comprenant du krill comme matière de départ est employé, **caractérisé en ce que** la pénétration des assaisonnements dans les matières alimentaires est favorisée et/ou les matières alimentaires sont ramollies.

2. Procédé d'assaisonnement de matières alimentaires selon la revendication 1, dans lequel le krill utilisé comme matière de départ est sous la forme de krill séché.

3. Procédé d'assaisonnement de matières alimentaires selon la revendication 1 ou 2, dans lequel le krill utilisé comme matière de départ est sous la forme de particules de krill séché contenant tous les composants du krill.

4. Procédé d'assaisonnement de matières alimentaires selon l'une quelconque des revendications précédentes, dans lequel l'assaisonnement comprenant du krill comme matière de départ est produit en ajoutant de l'eau, du sel et du *koji* au krill employé comme matière de départ dans l'étape de production de *moromi* (une purée de sauce de soja), en ajoutant ensuite des bactéries d'acide lactique et de la levure, puis en faisant fermenter et vieillir le *moromi.*

5. Procédé d'assaisonnement de matières alimentaires selon la revendication 4, dans lequel les bactéries d'acide lactique et la levure sont halotolérantes.

6. Procédé d'assaisonnement de matières alimentaires selon la revendication 4, dans lequel les bactéries d'acide lactique et la levure sont ajoutées dans un pourcentage tel que la quantité des bactéries d'acide lactique est de 10 fois ou plus la quantité de la levure.

7. Procédé d'assaisonnement de matières alimentaires selon l'une quelconque des revendications précédentes, dans lequel les matières alimentaires sont des légumes et/ou de la viande dans lesquels l'assaisonnement pénètre.

8. Procédé d'assaisonnement de matières alimentaires selon l'une quelconque des revendications précédentes, dans lequel les matières alimentaires sont de la viande et la viande est ramollie avec la pénétration de l'assaisonnement.
